# EUROPEAN PATENT SPECIFICATION

(11) **EP 0 920 739 B1**
(45) Date of publication and mention of the grant of the patent: **22.12.2004**
(21) Application number: 97944437.9
(22) Date of filing: 16.09.1997
(51) Int. Cl.: H04B 1/38, H04N 7/173, H04N 5/00

(54) **METHOD AND APPARATUS FOR PROVIDING CONTROL CHANNEL COMMUNICATIONS FOR AN INFORMATION DISTRIBUTION SYSTEM**
VEFAHREN UND GERÄT ZUR STEUERKANALKOMMUNIKATION EINES INFORMATIONSVERTEILUNGSSYTEMS
PROCEDE ET APPAREIL DESTINES A FOURNIR DES COMMUNICATIONS SUR CANAUX DE COMMANDE POUR UN SYSTEME DE DISTRIBUTION D'INFORMATIONS

(30) Priority: 17.09.1996 US 718075
(43) Date of publication of application: 09.06.1999
(73) Proprietor: Sedna Patent Services, LLC, Philadelphia, Pennsylvania 19102 (US)
(72) Inventor: MEYER, Thomas, John, Mercerville, NJ 08619 (US); LIU, Tianmin, Lawrenceville, NJ 08648 (US); ANDERSON, Bruce, James, Yardville, NJ 08620 (US)
(74) Representative: Pratt, Richard Wilson
(86) International application number: PCT/US1997/017177
(87) International publication number: WO 1998/012823

(56) References cited:
- US-A- 4 688 248
- US-A- 5 355 162
- US-A- 5 625 651

## Description

### BACKGROUND OF THE INVENTION

### Technical Field of the Invention

The present invention relates to code division multiple access (CDMA) systems, and more particularly, to a method for multiplexing a plurality of variable rate parallel information streams in a CDMA system.

### Description of Related Art

As mobile communications systems continue to develop, the requirements for high rate data transmission services within mobile communications systems are continuing to increase. Multimedia services, such as speech and video, and internet communications require several parallel and independent information streams to be transferred between a mobile station and a network over a single communications connection. The information streams may have different bit rates, different bit error rates, different delays, etc. Additionally, the parallel information streams may have variable bit rates for applications such as variable rate speech codecs and packet-switched data communications. This will require the information streams to have the ability to independently vary their bandwidth.

Direct sequence code division multiple access (DS-CDMA) is one of the multiple access candidates suitable for dealing with variable rate information streams. However, presently existing configurations for DS-CDMA have significant limitations which need to be overcome. DS-CDMA systems operating under the IS-95 protocol enable single code transmission with a fixed spreading factor. Thus, each communications connection is allocated a single code with a fixed nominal rate. Using the IS-95 protocol, up to three information streams (signaling, primary and secondary traffic) can be multiplexed together. However, the bit rate of each data stream cannot be independently chosen because the sum of the bit rates cannot exceed the nominal rate for the code channel. If the sum of the bit rate is smaller than the nominal rate, discontinuous transmission (DTX) is used.

The IS-95 protocol suffers from several drawbacks with respect to variable bit rate information streams. The bit rate for the IS-95 protocol is relatively low. Additionally, only a limited number of combinations of different data streams are defined by the protocol. Furthermore, explicit information concerning the combination of information streams being transmitted from the mobile station is only partially transmitted to the network. One solution for the low bit rate problem would be to extend the IS-95 protocol to include multi-code transmission. However, this would be a waste of codes, as on average, each stream only make partial use of the codes it had been allocated. Increasing the number of possible bit rates would be difficult since no explicit bit rate information is transmitted to the network.

The CODIT solution enables single code transmission with variable spreading. Under this solution, parallel variable rate information streams are separately coded and multiplexed into a physical data channel (PDCH). Information about the current characteristics of the different information streams of a connection is transmitted on a parallel, constant bit rate physical control channel (PCCH). The bit rate information transmitted on a PCCH during a 10 millisecond frame period refers to the information streams carried in the PDCH during the same 10 millisecond frame period. The PCCH and PDCH are transmitted on two separate code channels. For closed-loop power control the receiver measures the power of the PCCH enabling the receiver to avoid knowing the current PDCH bit rate in order to make a power control decisions.

The CODIT solution is not totally satisfactory since only a limited number of combinations of information streams are defined by the protocol. If a new combination or type of information is needed, for example, a different set of rates for variable rate streams, the specification must be changed.

Another problem with the CODIT solution when applied to orthogonal code systems is related to how bit rate information is transferred to the receiver. First, it must be possible to decode the rate information even if the previous frame was erroneous. The CODIT solution with a parallel constant-rate code channel is not desirable for a system with a limited number of orthogonal codes since the number of codes used must be minimized. Further, for a speech only terminal, using more than one code increases the complexity.

U.S. Patent No. 5,537,410 describes a synchronous fixed frame boundary system with variable data rates. A transmitter inserts into a current frame an indication of the data rate of the next frame. The subsequent frames are known before processing, thereby reducing the processing load. The rate indication is inserted into the frame to be error protected to increase reliability.

WO 95 35 002 discloses a method for performing rate and service negotiation in a digital communication system. During service negotiation a forward and reverse multiplex option and an associated rate set are selected. Primary traffic, secondary traffic and signaling traffic are multiplexed into a frame format in accordance with the selected multiplex option.

A final solution utilizes coherent wideband CDMA (CW-CDMA). Coherent wideband CDMA is a multi-code transmission stream wherein each connection allocates one of several codes with a fixed nominal rate to a data stream. The concept is not completely developed in the sense that no manner of carrying out variable rate multi-code transmission has yet been presented. Rate information to the transceiver is time-multiplexed together with the information streams and transmitted over the same set of codes. While no implementation of multi-code transmission of parallel variable rate information streams has been described with respect to the CW-CDMA concept, one solution would be to transmit different information streams using different code sets.

However, this would be a waste of codes as each stream would only make partial use of its allocated codes. This is a serious problem in the downlink where there are only a limited number of orthogonal codes available. Another problem with this concept is that if a frame is received for which the bit rate information is unknown, the closed-loop power control can only be based on the fixed rate overhead portions in each slot, such as e.g. pilot symbols, for a DTX variable rate transmission. This provides worse performance than if all transmitted bits are used to measure received energy. Finally, in the case of a multi-code transmission, if the bit rate is unknown, then it is not known what codes are being used. Discontinuous transmission (DTX) involves the transmission of data at less than the nominal information bit rate of a system. In discontinuous transmissions the data is not transmitted over a user channel 100% of the time.

### SUMMARY OF THE INVENTION

The present invention overcomes the foregoing and other problems with methods according to the independent claims.

### BRIEF DESCRIPTION OF THE DRAWINGS

For a more complete understanding of the present invention, reference is made to the following detailed description taken in conjunction with the accompanying drawings wherein:
FIGURE 1 is a block diagram illustrating communications between a mobile station and a public land mobile network;
FIGURE 2 illustrates an information stream;
FIGURE 3 is a block diagram illustrating the preferred embodiment of the method for multiplexing variable bit information streams for transmission from a mobile station to a public land mobile network;
FIGURE 4 is a block diagram illustrating a method for providing additional protection to information streams by forward error coding and interleaving prior to multiplexing into a common information frame; and
FIGURE 5 illustrates an alternative embodiment of the invention wherein two common information streams have different inner coding and interleaving.

### DETAILED DESCRIPTION OF THE INVENTION

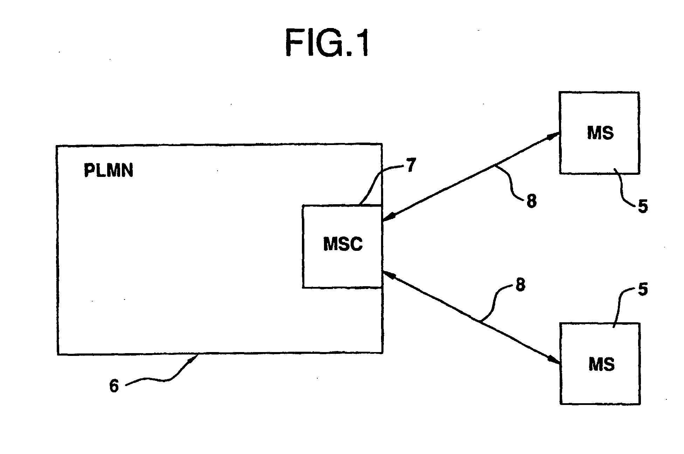

Referring now to the drawings, and more particularly, to FIGURE 1, there is shown a block diagram of a mobile station 5 and a public land mobile network 6 including a mobile switching center 7. When initially establishing a connection between a mobile station 5 and a public land mobile network 6, a connection including only a single predefined information stream 8 is first established. This information stream 8 is the dedicated control channel (DCCH) through which further signaling for setting up other data streams is performed. Through the DCCH 8, the number of information streams and the size of bit rate information frames are initially determined. Also during call setup, the manner of coding and interleaving of each information stream is determined.

The number of bits within a bit rate information frame is implicitly given by the size of the rate sets. The size of rate sets may be set by selecting a predefined combination of information streams each having a predefined set of rates. Alternatively, the rate sets may be selected by choosing any combination of information streams wherein the rate set is defined in terms of the number of bit rate levels and the number of bits per frame for each bit rate level.

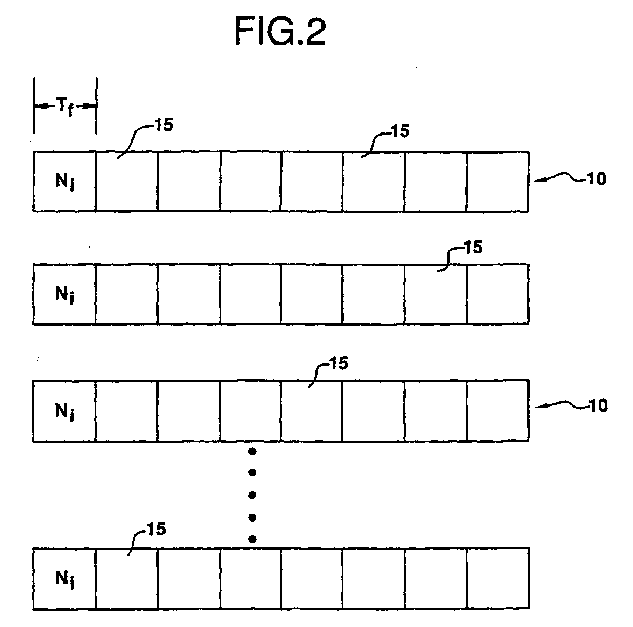

Referring now to FIGURE 2 there is illustrated and information stream 10. Each information stream 10 is synchronized such that each frame 15 has a frame interval length of T_{f} seconds T_{f} is a system constant, typically in the range of 1 to 20 ms. Nᵢ (wherein i refers to information stream number i) information bits are contained within each frame interval of an information stream 10. The instantaneous bit rate for each information stream is defined by the equation Rᵢ = Nᵢ/T_{f}. For variable rate data streams, Nᵢ varies on a frame-by-frame basis.

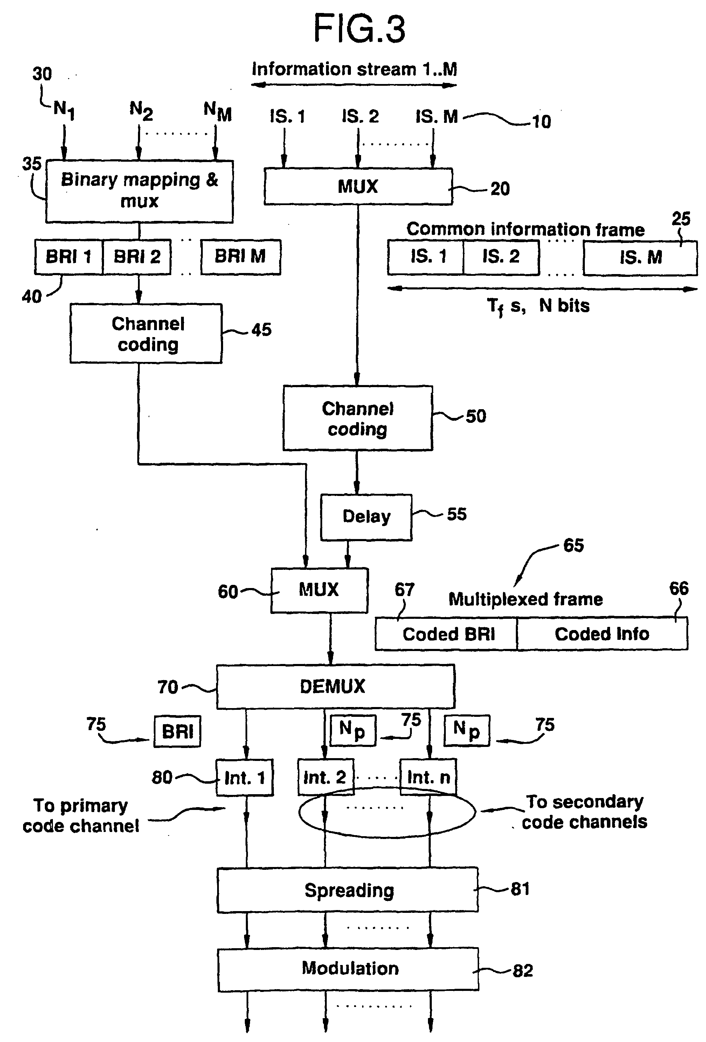

Referring now also to FIGURE 3 there is illustrated the preferred embodiment of the present invention. The bits of each information stream 10 to be transmitted arrive during a given frame interval T_{f} and are multiplexed by a multiplexer 20 into a stream of common information frames 25. Each common information frame 25 consists of a single frame interval T_{f} from each of the bit streams 10 during a particular frame interval. Simultaneously, the number of bits (Nᵢ) 30 for each information stream 10 in the common information frame 25 are converted at block 35 to binary representations and multiplexed together into a bit rate information (BRI) frame 40. Thus, the BRI frame 40 consists of the converted and multiplexed number of bits for each frame of the information stream 10 in the common information frame 25.

The common information frame 25 and BRI frame 40 are each independently channel coded at blocks 50 and 45, respectively. The channel encoding process may include the steps of adding tail bits to the end of the time multiplexed information streams and/or encoding with a convolutional encoder at a predetermined rate. However, it should be realized that other types of channel encoding processes would be equally applicable to the invention as described.

The coded information frame 25 is optionally frame delayed at block 55 for one frame and then multiplexed with the coded BRI frame 40 by multiplexer 60. This creates a multiplexed frame 65 consisting of coded information stream data 66 and coded BRI data 67 for the coded information stream data of the next multiplexed frame. By frame delaying the coded information frame, the coded BRI portion 67 of the multiplexed frame will indicate the number of information bits in the next multiplexed frame. This enables the receiver to know the total number of bits to be received in the next frame. A receiver can use this information to estimate the received power of the signal and control the power output of the mobile station in order to receive a desired power level at the base station via closed-loop power control by measuring the received power and/or SIR for the port of each slot used by the transmitter. Alternatively, a coded information frame may be multiplexed with its own BRI portion 67.

The multiplexed frame 65 is demultiplexed at block 70 into code channel frames 75 having a fixed length of N_{f} bits. However, there can be different types of code channels with different spreading ratios. Thus, the channel frames of one type of code channel may have a fixed length N_{f1} while the channel frames of another type of code channel has a length N_{f2}. Zero padding bits may be applied to the last channel frame 75 if the length of the channel frame is not an exact multiple of N_{f}. Each coded channel frame 75 is separately block interleaved within a 10 ms frame period for transmission over an assigned code channel. Additional information and overhead, such as pilot symbols and power control commands, may be multiplexed into the channel frames either before or after interleaving at block 80.

Each interleaved channel frame has a unique spreading code applied thereto at block 81 and is modulated at block 82 onto a carrier for transmission from the base station. If zero padding has been applied to the final channel frame, the corresponding part of the code channel 75 containing the zero padding is not transmitted. Each channel frame is transmitter on a separate code channel.

If more than one code channel is used for transmitting the plurality of channel frames 75, the demultiplexing at block 70 of the multiplexed frame 65 into channel frames always allocates the BRI field 67 to the first code channel. This code channel is denoted as the primary code-channel since the BRI field 67 contains information informing the receiver at the base station how many, and possibly which code-channels are being used, and the number of bits included in the following frame. In order to better utilize available secondary code channels, the BRI field 67 may be extended to include the identity of the first secondary code channel which is used and the number of secondary code-channels to be used. This enables a dynamic allocation of code channels in consecutive blocks. This assures the number of code channels occupied at any particular time will equal the number of code-channels used. In this manner unnecessary code-channel usage is substantially reduced in both the forward and reverse links.

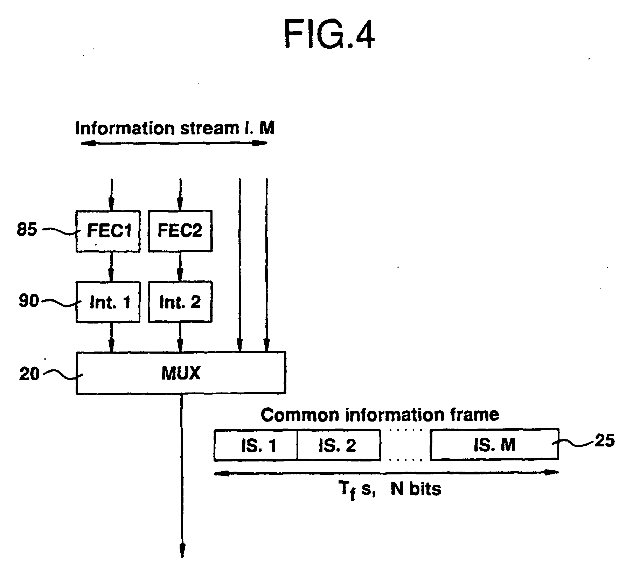

The embodiment of FIGURE 3, illustrates the channel coding of each information stream 10 with the same channel coding scheme. If more protection is needed for a particular information stream 10, additional coding in the form of forward error coding 85 and additional interleaving 90 may be included prior to multiplexing of the information streams at multiplexer 20 as shown in FIGURE 4. Any additional coding and interleaving may be performed separately on particular streams and then multiplexed with the uncoded information streams into the common information frame 25.

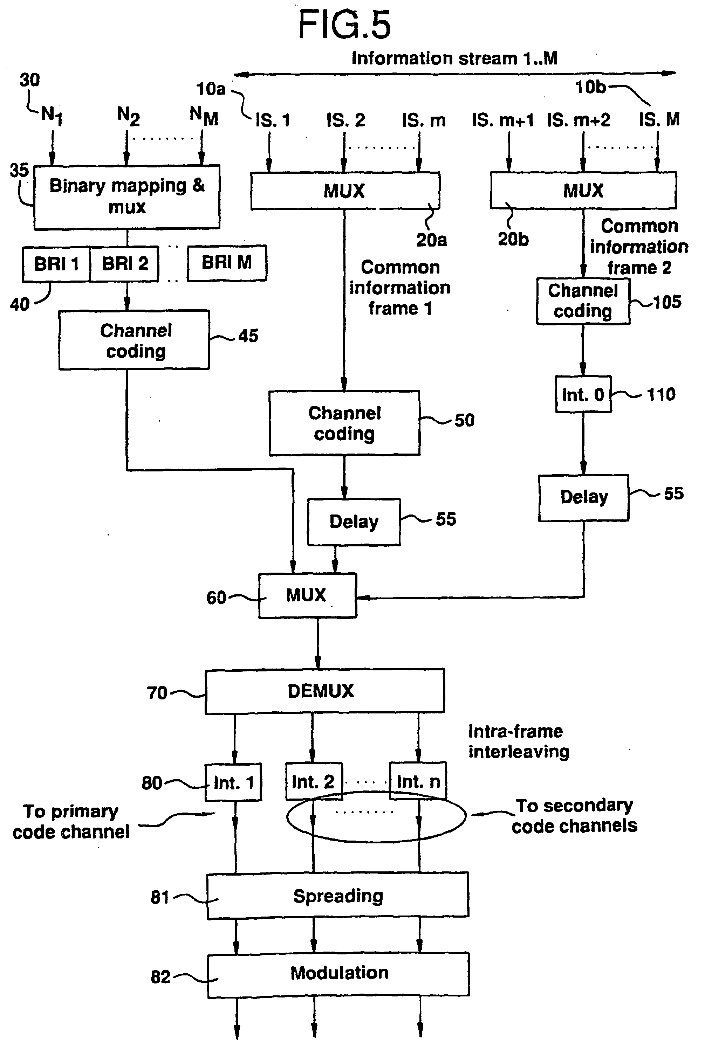

FIGURE 5 illustrates an alternative embodiment of the invention wherein M common information streams 10a and 10b requiring different inner coding and interleaving are combined at multiplexer 60. The flexibility of the embodiment of FIGURE 3 is achieved with the penalty that all information streams 10 must undergo the same interleaving and coding scheme. This can be limiting for information streams 10 that may gain performance by longer inner interleaving. This problem can be solved by having a small number parallel streams combined into a common information stream after separate coding and possibly multi-frame interleaving. One set of information streams 10a is multiplexed at 20a and subjected to a first inner channel coding 50 with one frame interleaving at 80. The other set of information streams 10b is multiplexed at 20b and subjected to a second channel coding rate 105 and a multi-frame interleaving 110. The two separately coded common information frames are then multiplexed together at block 60, as described previously.
Although preferred embodiments of the method and apparatus of the present invention have been illustrated in the accompanying Drawings and described in the foregoing Detailed Description, it is understood that the scope of protection is defined by the following claims.

## Claims

1. A method for transmitting a plurality of information streams (10) having variable data rates, **characterized by** the steps of:
multiplexing the plurality of information streams together to form a common information frame (25), wherein the common information frame includes a frame from each one of the plurality of information streams;
channel coding (50) the common information frame;
multiplexing a bit rate information frame comprising a fixed number of overhead bits to the channel coded common information frame to form a multiplexed frame (65);
demultiplexing the multiplexed frame into at least one channel frame (75); and
transmitting each of the at least one channel frame over a separate code channel, wherein a primary code channel always contains the bit rate information frame.

2. The method of Claim 1, further including the step of processing at least one of the information streams prior to multiplexing.

3. The method of Claim 2 wherein the step of processing comprises forward error coding.

4. The method of Claim 2 wherein the step of processing comprises interleaving.

5. The method of Claim 1 wherein the step of channel coding further comprises the step of convolutionally encoding the common information frame at a predetermined rate.

6. The method of Claim 1 wherein the step of channel coding further comprises the step of adding bits to an end of the multiplexed frames within the common information frame.

7. The method of Claim 1 wherein the bit rate information frame comprises a number of bits for each information stream in the following multiplexed frame.

8. The method of Claim 7 wherein the bit rate information frame for the following information multiplexed frame is used for improving closed loop power control in the next frame.

9. The method of Claim 1, further including the step of encoding the bit rate information frame separately from the common information frame.

10. The method of Claim 9 wherein the step of coding comprises the step of convolutional encoding.

11. The method of Claim 8 wherein the step of channel coding further comprises the step of adding bits to an end of the multiplexed frames within the common information frame.

12. The method of Claim 1 wherein the overhead bits are multiplexed to the channel encoded bits such that the overhead bits comprise a first channel frame of the at least one channel frame.

13. The method of Claim 1, further including the step of interleaving the at least one channel frame and the channel frame prior to transmission on the code channels.

14. The method of Claim 1, further including the step of predetermining the number of the plurality of information streams during a cellular call setup.

15. A method for transmitting a plurality of information streams (10a, 10b) having variable data rates, **characterized by** the steps of:
multiplexing a first portion of the plurality of information streams into a first common information frame;
multiplexing a second portion of the plurality of information streams into a second common information frame;
channel coding (50) the first common information frame according to a first channel coding rate;
channel coding (105) the second common information frame according to a second channel coding rate;
multi-frame interleaving the second common information frame;
multiplexing the first common information frame with the second common information frame and a bit rate information frame comprising a fixed number of overhead bits to form a multiplexed frame;
demultiplexing the multiplexed frame into at least one channel frame; and
transmitting each of the at least one channel frame over a separate code channel, wherein a primary code channel always contains the bit rate information frame.

16. The method of Claim 17 wherein the bit rate information frame comprises a number of bits for each information stream in the following multiplexed frame.

## Patentansprüche

1. Verfahren zum Übertragen einer Vielzahl von Informationsströmen (10) mit variablen Datenraten, **gekennzeichnet durch** die Schritte:
Multiplexen der Vielzahl von Informationsströmen zusammen, um einen gemeinsamen Informationsrahmen (25) zu bilden, wobei der gemeinsame Informationsrahmen einen Rahmen von jedem einen aus der Vielzahl von Informationsströmen inkludiert;
Kanalkodieren (50) des gemeinsamen Informationsrahmens;
Multiplexen eines Bitrateninformationsrahmens, umfassend eine fixierte Zahl von Overhead-Bits zu dem kanalkodierten gemeinsamen Informationsrahmen, um einen multiplexten Rahmen (65) zu bilden;
Demultiplexen des multiplexten Rahmens in mindestens einen Kanalrahmen (75); und
Übertragen von jedem des mindestens einen Kanalrahmens über einen getrennten Codekanal, wobei ein primärer Codekanal stets den Bitrateninformationsrahmen enthält.

2. Verfahren nach Anspruch 1, ferner inkludierend den Schritt zum Verarbeiten mindestens eines von den Informationsströmen vor Multiplexen.

3. Verfahren nach Anspruch 2, wobei der Schritt zum Verarbeiten Vorwärtsfehlerkodierung umfasst.

4. Verfahren nach Anspruch 2, wobei der Schritt zum Verarbeiten Verschachtelung umfasst.

5. Verfahren nach Anspruch 1, wobei der Schritt von Kanalkodierung ferner den Schritt von Faltungskodierung des gemeinsamen Informationsrahmens bei einer vorbestimmten Rate umfasst.

6. Verfahren nach Anspruch 1, wobei der Schritt von Kanalkodierung ferner den Schritt zum Hinzufügen von Bits zu einem Ende der multiplexten Rahmen innerhalb des gemeinsamen Informationsrahmens umfasst.

7. Verfahren nach Anspruch 1, wobei der Bitrateninformationsrahmen eine Zahl von Bits für jeden Informationsstrom in dem folgenden multiplexten Rahmen umfasst.

8. Verfahren nach Anspruch 7, wobei der Bitrateninformationsrahmen für den folgenden multiplexten Informationsrahmen zum Verbessern eines geschlossenen Leistungsregelkreises in dem nächsten Rahmen verwendet wird.

9. Verfahren nach Anspruch 1, ferner inkludierend den Schritt zum Kodieren des Bitrateninformationsrahmens getrennt von dem gemeinsamen Informationsrahmen.

10. Verfahren nach Anspruch 9, wobei der Schritt zum Kodieren den Schritt von Faltungskodierung umfasst.

11. Verfahren nach Anspruch 8, wobei der Schritt von Kanalkodierung ferner den Schritt zum Hinzufügen von Bits zu einem Ende der multiplexten Rahmen innerhalb des gemeinsamen Informationsrahmens umfasst.

12. Verfahren nach Anspruch 1, wobei die Overhead-Bits zu den kanalkodierten Bits derart multiplext werden, dass die Overhead-Bits einen ersten Kanalrahmen des mindestens einen Kanalrahmens umfassen.

13. Verfahren nach Anspruch 1, ferner inkludierend den Schritt zum Verschachteln des mindestens einen Kanalrahmens und des Kanalrahmens vor einer Übertragung in den Codekanälen.

14. Verfahren nach Anspruch 1, ferner inkludierend den Schritt zum vorherigen Bestimmen der Zahl der Vielzahl von Informationsströmen während einer zellularen Rufeinrichtung.

15. Verfahren zum Übertragen einer Vielzahl von Informationsströmen (10a, 10b) mit variablen Datenraten, **gekennzeichnet durch** die Schritte:
Multiplexen eines ersten Abschnitts der Vielzahl von Informationsströmen in einen ersten gemeinsamen Informationsrahmen;
Multiplexen eines zweiten Abschnitts der Vielzahl von Informationsströmen in einen zweiten gemeinsamen Informationsrahmen;
Kanalkodieren (50) des ersten gemeinsamen Informationsrahmens gemäß einer ersten Kanalkodierungsrate;
Kanalkodieren (105) des zweiten gemeinsamen Informationsrahmens gemäß einer zweiten Kanalkodierungsrate; Multirahmen-Verschachteln des zweiten gemeinsamen Informationsrahmens;
Multiplexen des ersten gemeinsamen Informationsrahmens mit dem zweiten gemeinsamen Informationsrahmen und einem Bitrateninformationsrahmen, umfassend eine fixierte Zahl von Overhead-Bits, um einen multiplexten Rahmen zu bilden;
Demultiplexen des multiplexten Rahmens in mindestens einen Kanalrahmen; und
Übertragen von jedem des mindestens einen Kanalrahmens über einen getrennten Codekanal, wobei ein primärer Codekanal stets den Bitrateninformationsrahmen enthält.

16. Verfahren nach Anspruch 15, wobei der Bitrateninformationsrahmen eine Zahl von Bits für jeden Informationsstrom in dem folgenden multiplexten Rahmen umfasst.

## Revendications

1. Procédé de transmission d'une pluralité de flux d'informations (10) ayant des débits de données variables, **caractérisé par** les étapes consistant à :
multiplexer ensemble la pluralité de flux d'informations afin de former une trame d'informations commune (25), la trame d'informations commune comprenant une trame de chacun de la pluralité des flux d'informations ;
réaliser le codage canal (50) de la trame d'informations commune ;
multiplexer une trame d'informations de débit binaire contenant un nombre fixe de bits de service sur la trame d'informations commune ayant subi le codage canal afin de former une trame multiplexée (65) ;
démultiplexer la trame multiplexée en au moins une trame de canal (75) ; et
émettre chacune des, au moins une, trames de canal sur un canal de code distinct,
un canal de code primaire contenant toujours la trame d'informations de débit binaire.

2. Procédé selon la revendication 1, comprenant en outre l'étape consistant à traiter au moins un des flux d'informations avant le multiplexage.

3. Procédé selon la revendication 2, dans lequel l'étape de traitement comprend un codage d'erreur direct.

4. Procédé selon la revendication 2, dans lequel l'étape de traitement comprend l'entrelacement.

5. Procédé selon la revendication 1, dans lequel l'étape de codage canal comprend en outre l'étape consistant à réaliser un codage convolutif sur la trame d'informations commune à un débit prédéterminé.

6. Procédé selon la revendication 1 dans lequel l'étape de codage canal comprend en outre l'étape consistant à ajouter des bits à une extrémité des trames multiplexées, dans la trame d'informations commune.

7. Procédé selon la revendication 1, dans lequel la trame d'informations de débit binaire comprend un certain nombre de bits pour chaque flux d'informations dans la trame multiplexée suivante.

8. Procédé selon la revendication 7, dans lequel la trame d'informations de débit binaire pour la trame d'informations multiplexée suivante est utilisée pour améliorer la commande de puissance en boucle fermée sur la trame suivante.

9. Procédé selon la revendication 1, comprenant en outre l'étape consistant à coder la trame d'informations de débit binaire séparément de la trame d'informations commune.

10. Procédé selon la revendication 9, dans lequel l'étape de codage comprend l'étape de codage convolutif.

11. Procédé selon la revendication 8, dans lequel l'étape de codage canal comprend en outre l'étape consistant à ajouter des bits à une extrémité des trames multiplexées au sein de la trame d'informations commune.

12. Procédé selon la revendication 1, dans lequel les bits de service sont multiplexés avec les bits à codage canal de manière à ce que les bits de service comprennent une première trame de canal sur au moins une trame de canal.

13. Procédé selon la revendication 1, comprenant en outre l'étape consistant à entrelacer l'au moins une trame de canal et la trame de canal avant la transmission sur les canaux de code.

14. Procédé selon la revendication 1, comprenant en outre l'étape consistant à prédéterminer le nombre de la pluralité de flux d'informations pendant l'établissement d'un appel cellulaire.

15. Procédé de transmission d'une pluralité de flux d'informations (10a, 10b) ayant des débits de données variables, **caractérisé par** les étapes consistant à :
multiplexer une première partie de la pluralité de flux d'informations afin de former une première trame d'informations commune ;
multiplexer une seconde partie de la pluralité de flux d'informations afin de former une seconde trame d'informations commune ;
réaliser le codage canal (50) sur la première trame d'informations commune selon un premier débit de codage de canal ;
réaliser le codage canal (105) sur la seconde trame d'informations commune selon un second débit de codage de canal ;
réaliser un entrelacement sur plusieurs trames de la seconde trame d'informations commune ;
multiplexer la première trame d'informations commune avec la seconde trame d'informations commune et une trame d'informations de débit binaire comprenant un nombre fixe de bits de service afin de former une trame multiplexée ;
démultiplexer la trame multiplexée en au moins une trame de canal ; et
émettre chacune des, au moins une, trames de canal sur un canal de code distinct, un canal de code primaire contenant toujours la trame d'informations de débit binaire.

16. Procédé selon la revendication 17, dans lequel la trame d'informations de débit binaire comprend un certain nombre de bits pour chaque flux d'informations dans la trame multiplexée suivante.
